# EUROPEAN PATENT SPECIFICATION

(11) **EP 3 707 046 B1**
(45) Date of publication and mention of the grant of the patent: **11.01.2023**
(21) Application number: 18815016.3
(22) Date of filing: 09.11.2018
(51) Int. Cl.: B60W 30/16

(54) **ADJUSTING THE LONGITUDINAL MOTION CONTROL OF A HOST MOTOR VEHICLE BASED ON THE ESTIMATION OF THE TRAVEL TRAJECTORY OF A LEADING MOTOR VEHICLE**
EINSTELLEN DER LÄNGSBEWEGUNGSSTEUERUNG EINES HOST-KRAFTFAHRZEUGS BASIEREND AUF DER SCHÄTZUNG DER FAHRTRAJEKTORIE EINES FÜHRENDEN KRAFTFAHRZEUGS
RÉGLAGE DE LA COMMANDE DE MOUVEMENT LONGITUDINAL D'UN VÉHICULE AUTOMOBILE HÔTE SUR LA BASE DE L'ESTIMATION DE LA TRAJECTOIRE DE DÉPLACEMENT D'UN VÉHICULE AUTOMOBILE AVANT

(30) Priority: 10.11.2017 IT 201700128731
(43) Date of publication of application: 16.09.2020
(73) Proprietor: C.R.F. Società Consortile per Azioni, 10043 Orbassano (IT)
(72) Inventor: LANFRANCO, Claudio, 10043 Orbassano (TO) (IT)
(74) Representative: Bergadano, Mirko
(86) International application number: PCT/IB2018/058836
(87) International publication number: WO 2019/092656

(56) References cited:
- WO-A1-2008/004963
- DE-A1-102005 014 309
- DE-A1-102010 032 086
- DE-A1-102014 009 625
- DE-A1-102014 208 180
- US-A1- 2009 164 109
- US-A1- 2013 179 379
- US-A1- 2014 114 548

## Description

### Technical Field of the Invention

The present invention relates in general to motor vehicle driver assistance, and in particular to adjusting the longitudinal motion control of a motor vehicle based on the estimation of the travel trajectory of a leading motor vehicle.

The present invention finds application in any type of road motor vehicle, whether it is used for the transport of people, such as a car, a bus, a camper, etc., or for the transport of goods, such as an industrial motor vehicle (truck, road train, articulated truck, etc.) or light or medium-heavy commercial motor vehicle (van, closed vehicle, cabbed vehicle, etc.).

### State of the Art

As is known, in recent years motor vehicle manufacturers have invested considerable resources in research into Advanced Driver Assistance Systems (ADAS) to improve driving safety and comfort.

For this reason, and because it will help to achieve the targets imposed by the European Union for the reduction of road accidents, ADAS is one of the fastest growing segments in the automotive sector and is set to become increasingly popular in the coming years.

The safety features of these systems are designed to avoid collisions and accidents by offering technologies which alert drivers to potential problems, or to avoid collisions by implementing safety measures and taking control of vehicles. The adaptive features can automate lighting, provide adaptive cruise control, automate braking, incorporate GPS/traffic information, connect smartphones, alert drivers of other vehicles to hazards, keep drivers in the correct lane, or show what is in blind spots.

ADAS technology is based on camera/vision systems, sensory systems, automotive data networks, vehicle-to-vehicle (V2V) or vehicle-to-infrastructure (V2I) communication systems. Next-generation ADAS systems will increasingly use wireless connectivity to add value to V2V or V2I communication.

According to studies conducted by Accident Research of the German Association of Insurers (GDV), lane departure warning systems alone can prevent up to 15% of road accidents, while intersection assistance can prevent up to 35% of road accidents.

Technological developments such as integration of radar and cameras, and the combined use of sensors between multiple applications, are expected to provide cost reductions that could lead to a more significant penetration of ADAS in the small vehicle market by 2018.

With regard to the automotive Adaptive Cruise Control (ACC) system, as is known, it is designed to act in a combined manner on the engine and the braking system of the host motor vehicle so as to accelerate and decelerate the host motor vehicle to enable it to maintain a cruising speed or a cruising distance that can be set and adjusted by the driver.

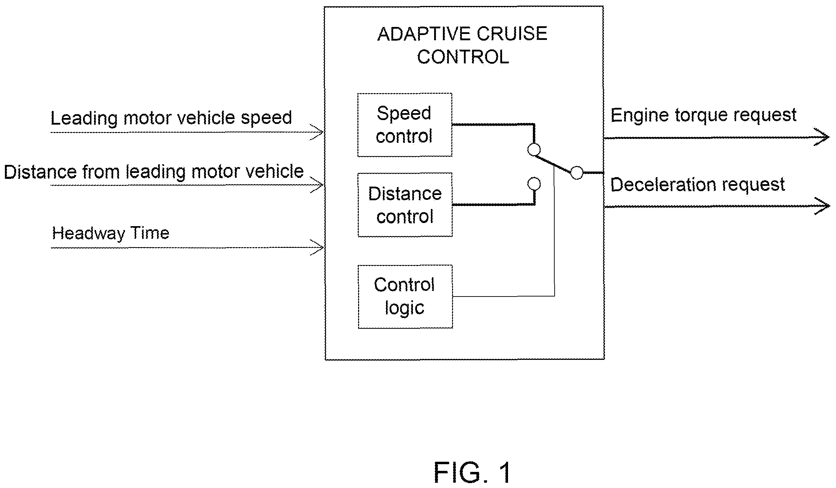

Figure 1 shows a basic functional block diagram of the operations implemented by an automotive electronic control unit (ECU) to implement a prior art ACC functionality.

As shown in Figure 1, the prior art ACC functionality operates based on various input quantities, including the current speed of the host motor vehicle, a cruise speed of the host motor vehicle set by the driver, the current relative speed and distance of the host motor vehicle relative to a leading motor vehicle, and the cruise distance of the host motor vehicle from a leading motor vehicle set by the driver through the setting of the so-called Headway Time, which represents, in terms of time rather than distance, the cruise distance that the driver of the host motor vehicle wishes to maintain relative to the leading motor vehicle, and which may not be less than a given value representing the safety distance, which, as is known, depends on the current speed of the host motor vehicle and on an average driver reaction time.

The headway time is generally selectable by the driver of the host motor vehicle from a range of stored values resulting in a longer or shorter cruise distance of the host motor vehicle from a leading motor vehicle. A value of two seconds is generally considered sufficient for most drivers to prevent a rear-end collision with the leading motor vehicle.

As shown in Figure 1, the ACC functionality is designed to operate in two different modes, a cruise mode, in which the current speed of the host motor vehicle is controlled to maintain a driver-settable cruise speed, and a follow mode, in which the current speed of the host motor vehicle is controlled to maintain a driver- settable cruise distance from a leading motor vehicle.

To do so, the ACC functionality is designed to implement independent speed and distance controls that are selectable by a control logic designed to cause the switch from the cruise mode to the follow mode in response to the detection of a leading motor vehicle being below a predetermined distance from the host motor vehicle, and the return to the cruise mode in response to the detection of no leading motor vehicle being below a predetermined distance from the host motor vehicle.

In the two above-described operating modes, the ACC functionality operates based on control parameters or quantities, which include, *inter alia,* the host motor vehicle cruise speed and distance, as well as the acceleration/deceleration profile to be achieved by the host motor vehicle in order to maintain the cruise speed and distance, and are designed to have, under normal operating conditions, driver-settable nominal values, such as the cruise speed and distance, or pre-determined values stored in the ECU, such as the acceleration/deceleration profile, or computed based thereon.

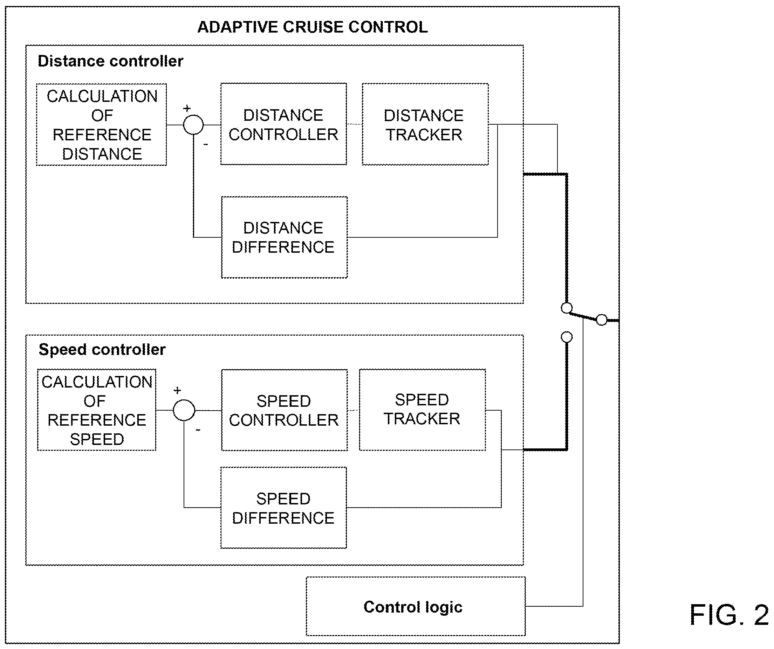

Figure 2 shows more detailed functional block diagrams for the speed and distance controls, which operate in a closed loop based on an error between a current value and a reference value of the controlled quantity (speed or distance) in order to eliminate the error between the two values and thus cause the current value to follow the reference value as closely as possible.

US 2014/114548 A1 discloses a method of controlling the speed and/or the distance for motor vehicles having distance-controlled cruise control systems is provided in which a sensor unit determines relevant data of a vehicle driving ahead. In the event of a detection of a target object driving ahead, desired acceleration values and/or desired deceleration values for reaching a predetermined desired distance to the target object are determined and outputted. While considering the relevant data of the target object, a swinging-out probability of the target object is determined and, as a function of the determined swinging-out probability, an adaptation of the desired distance to the target object is carried out.

US 2009/164109 A1 describes a motor vehicle motion control system wherein at least a follow-up target inter-vehicle distance is set on the basis of information about a preceding vehicle recognized by a forward-environment recognition device mounted in a subject vehicle and including a stereo camera, and it is determined whether or not the preceding vehicle is making a right/left turn. When a right/left turn of the preceding vehicle is detected, the follow-up target inter-vehicle distance is multiplied by a correction coefficient so as to set a different follow-up target inter-vehicle distance for the right/left turn.

DE 10 2014 208180 A1 discloses an ACC system and a method of controlling the speed of a motor vehicle equipped with a sensor unit capable of detecting signals emitted by another motor vehicle in the traffic, an evaluation unit for evaluating the signals emitted by the sensor unit of the other motor vehicle to determine its current and/or expected short-term driving behaviour, and an electronic control unit for controlling the speed of the motor vehicle relative to the other motor vehicle based on the driving behaviour of the other motor vehicle determined by the evaluation unit.

### Object and Summary of the Invention

The Applicant has experienced that in the prior art ACC systems, the limited visual capacity of the current sensors (radar, lidar, cameras) for detecting obstacles in front of the host motor vehicle fails to allow the ACC systems to recognise, and thus to take into account, the possible departure of the leading motor vehicle from the travel trajectory of the host motor vehicle. In many situations in which the leading motor vehicle departs from the travel trajectory of the host motor vehicle, for example in a situation in which the leading motor vehicle intends to leave the motorway and thus enters a deceleration lane, the progressive departure of the leading motor vehicle from the travel trajectory of the host motor vehicle is preceded by a slowing down of the leading motor vehicle, so that the ACC functionality causes a corresponding automatic slowing down of the host motor vehicle, aimed at keeping the host motor vehicle at the set cruise distance, despite the fact that the leading motor vehicle is departing the travel trajectory of the host motor vehicle.

In these situations, thus, the ACC functionality can cause an excessively conservative, if not indeed unnecessary, intervention on the host motor vehicle resulting in increased fuel consumption and reduced comfort of the automatic driving of the host motor vehicle.

The object of the present invention is to optimise the longitudinal control parameters of the ACC functionality in order to avoid unnecessary automatic decelerations or to carry out less conservative automatic decelerations, with a consequent reduction in fuel consumption and an increase in driving comfort.

According to the present invention, an automotive adaptive cruise control system is provided, as claimed in the appended Claims.

### Brief Description of the Drawings

Figures 1 and 2 show functional block diagrams of operations carried out by an automotive electronic control unit to implement a prior art ACC functionality.
Figures 3 and 4 show functional block diagrams of operations carried out by an automotive electronic control unit to implement the ACC functionality according to the present invention.
Figures 5 and 6 show graphical representations of two driving situations in which the ACC functionality according to the present invention allows unnecessary automatic decelerations to be avoided or less conservative automatic decelerations to be carried out.

### Detailed Description of Preferred Embodiments of the Invention

The present invention will now be described in detail with reference to the attached figures so as to allow a skilled person to create and use it. Various modifications to the described embodiments will be readily apparent to the persons skilled in the art and the general principles described herein may be applied to other embodiments and applications without departing from the protective scope of the present invention as defined in the attached claims. Therefore, the present invention should not be regarded as limited to the embodiments described and illustrated, it should instead be granted the widest protective scope consistent with the characteristics described and claimed.

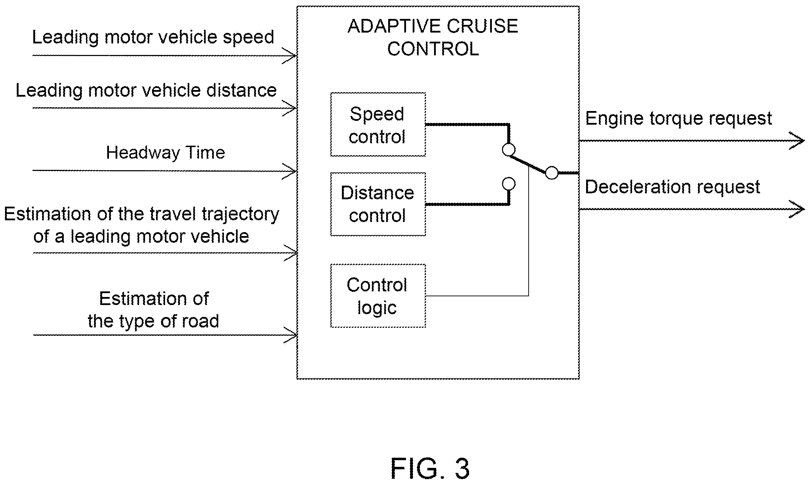

Figure 3 shows a basic functional block diagram of operations carried out by an automotive electronic control unit in order to implement the ACC functionality according to the present invention.

As can be appreciated from a comparison with the block diagram shown in Figure 1, compared to the prior art ACC functionality, the ACC functionality according to the present invention is designed to estimate, in the follow mode, the travel trajectory of the leading motor vehicle relative to that of the host motor vehicle, and when it is estimated that the leading motor vehicle is departing from the travel trajectory of the host motor vehicle, to adjust one or more control parameters accordingly based on which the ACC functionality operates in the follow mode.

The travel trajectory of the leading motor vehicle relative to that of the host motor vehicle for the purpose of determining whether the leading motor vehicle has departed or is departing from the travel trajectory of the host motor vehicle is estimated based on measurable or determinable quantities relating to both the leading motor vehicle, and in particular its distance from the lane centre, and the host motor vehicle, such as its distance from the lane centre, its lateral speed and the activation of a direction indicator, as well as based on the geometry of the road travelled by the host and leading motor vehicles.

The simplest road geometry can be defined by the road curvature only, which can be stored in digital road maps of an automotive global navigation satellite system, or computed by an automotive front vision system (forward-looking camera) which determines it based on horizontal signs (lane markings) captured by the front vision system.

More complex road geometries may also include, in addition to the road curvature, the road slope, the number of road lanes, junctions and intersections, etc., this information being provided by advanced automotive global navigation satellite system (electronic horizon - eHorizon).

Once the departure of the leading motor vehicle from the travel trajectory of the host motor vehicle is estimated, the control parameters used by the ACC functionality in the follow mode are modified in such a way as to achieve a less conservative longitudinal control, i.e., in such a way as to avoid unnecessary automatic deceleration of the host motor vehicle or to perform a less conservative automatic deceleration if the leading motor vehicle is departing from the travel trajectory of the host motor vehicle, resulting in a decrease in fuel consumption and in an increased automatic driving comfort.

Furthermore, in order to increase robustness of the ACC functionality, the present invention conveniently, but not necessarily, also provides for estimating the road adherence of the tyres of the host motor vehicle, thus allowing a more conservative longitudinal control logic to be selected if the environmental conditions differ from, and in particular are worse than, normal or nominal environmental conditions.

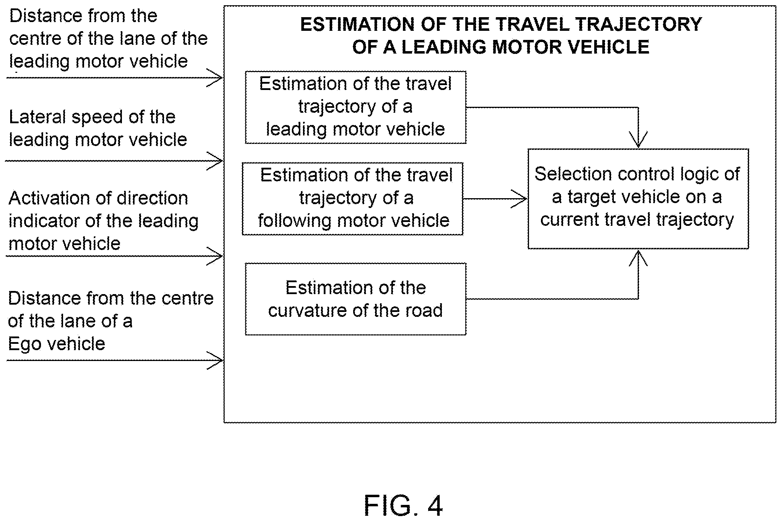

Figure 4 shows a more detailed functional block diagram of a travel trajectory estimator of the leading motor vehicle relative to that of the host motor vehicle implemented by the automotive ECU.

As shown in Figure 4, the travel trajectory estimator receives input data determined by the ECU based on signals from the sensory system of the host motor vehicle (radar, lidar, cameras) and/or stored in the ECU, and indicative of the following parameters:
- the geometry of the road travelled by the host and leading motor vehicles,
- the distance of the host motor vehicle from the lane centre,
- the distance of the leading motor vehicle from the lane centre and the lateral speed of the leading motor vehicle, parameters which can be determined based on signals from the on-board sensory system,
- the activation of a direction indicator of the leading motor vehicle, an operating condition that can be determined based on images from the forward-looking camera.

The travel trajectory estimator is designed to analyse the travel trajectory of the leading motor vehicle relative to that of the host motor vehicle and the curvature of the road travelled by the hot and leading motor vehicles in order to determine the departure of the leading motor vehicle from the travel trajectory of the host motor vehicle, and thus to determine a consequent change to be made to the values of the longitudinal control parameters of the ACC functionality.

In particular, in the follow mode, a change in the values of the control parameters may result in a change in one or both of the cruise distance of the host motor vehicle relative to the leading motor vehicle and the acceleration profile of the host motor vehicle.

The modification of the control parameters is also made dependent on the type of road travelled, thus differentiating the behaviour of the ACC functionality between urban roads, suburban roads, and motorways. Information on the type of road can be provided to the ECU either by a global navigation satellite system or by an estimator based on the average travel speeds.

In particular, modification of the cruise distance involves a reduction of the cruise distance, thus allowing the host motor vehicle to go closer to the leading motor vehicle, while modification of the acceleration profile may result in a quicker response of the host motor vehicle to return to the set cruise speed after the leading motor vehicle has departed from the travel trajectory of the host motor vehicle.

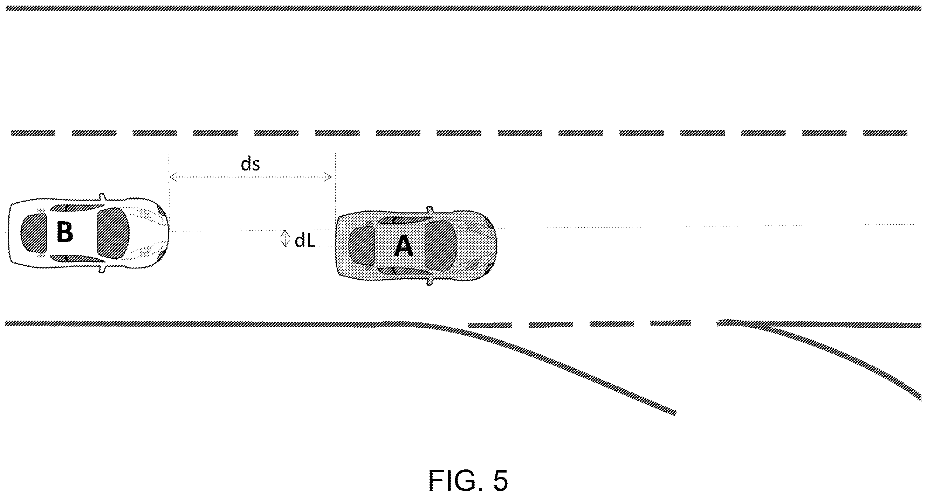

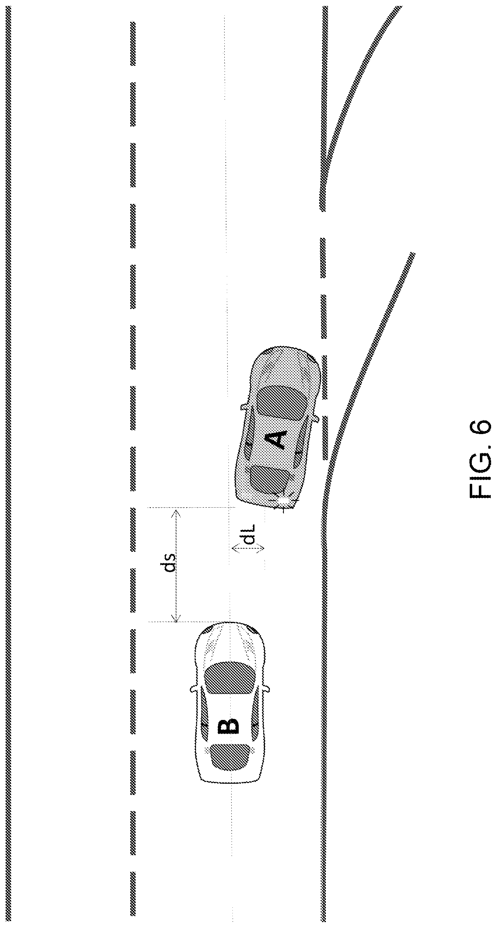

In Figures 5 and 6 a driving situation is graphically represented as an example in which a leading motor vehicle is entering a motorway deceleration lane and has consequently activated the direction indicator and its distance from the lave centre is progressively increasing.

In such a situation, the ACC functionality according to the present invention recognises the progressive departure of the leading motor vehicle from the travel trajectory of the host motor vehicle and consequently progressively reduces the cruise distance that the host motor vehicle is allowed to maintain relative to the leading motor vehicle, thus avoiding unnecessary automatic deceleration of the host motor vehicle or automatically slowing down the host motor vehicle by means of an automatic deceleration profile that is less conservative than the stored one.

Based on what has been described, the benefits that the present invention allow to achieve may be appreciated.

In particular, compared to the prior art ACC functionality, the present invention allows the operation of the ACC functionality to me adjusted by acting in particular on the longitudinal control parameters used by the ACC functionality in order to avoid or minimise unnecessary automatic decelerations of the host motor vehicle, or to perform less conservative automatic decelerations of the host motor vehicle if the leading motor vehicle is departing from the travel trajectory of the host motor vehicle, resulting in reduced fuel consumption and in an increased automatic driving comfort.

## Claims

1. An automotive adaptive cruise control (ACC) system for a host motor vehicle (B) configured to operate in at least two different operating modes configured to operate based on one or more control parameters, and comprising a first operating mode, in which a current speed of the host motor vehicle (B) is controlled to maintain a cruise speed, and a second operating mode, in which the current speed of the host motor vehicle (B) is controlled to maintain a cruise distance from a leading motor vehicle (A);
the operating modes are configured to operate based on one or more control parameters including one or more of the cruise speed, the cruise distance and the acceleration/deceleration profile to be implemented by the host motor vehicle (B) to maintain the cruise speed and distance;
wherein in the second operating mode, the automotive adaptive cruise control (ACC) system is further configured to:
- estimate a travel trajectory of the leading motor vehicle (A) relative to a travel trajectory of the host motor vehicle (B),
- determine whether the leading motor vehicle (A) is departing from the travel trajectory of the host motor vehicle (B) based on the estimated travel trajectory of the leading motor vehicle (A) relative to the travel trajectory of the host motor vehicle (B) and on a curvature of the road travelled by the leading and host motor vehicles (A, B), and
- when it is determined that the leading motor vehicle (A) is departing from the travel trajectory of the host motor vehicle (B), modify one or more of the control parameters based on which the automotive adaptive cruise control (ACC) operates in the second operating mode based on the type of road on which the leading and host motor vehicles (A, B) are travelling, so as to differentiate a behaviour of the automotive adaptive cruise control (ACC) system in the second operating mode between urban roads, suburban roads, and motorways.

2. The automotive adaptive cruise control (ACC) system of Claim **1**, further configured to:
- estimate road adherence of the host motor vehicle (B), and
- modify one or more of the control parameters based on which the automotive adaptive cruise control (ACC) system operates in the second operating mode based also on the estimated road adherence of the host motor vehicle (B).

3. The automotive adaptive cruise control system (ACC) system of any one of the preceding Claims, further configured to estimate the trajectory of the leading motor vehicle (A) relative to that of the host motor vehicle (B) based on the following variables:
- a geometry of the road travelled by the host and leading vehicles (A, B), which is defined by a road curvature, and optionally, if available, also by other road-related information such as a road slope, a number of road lanes, and road junctions and intersections;
- distances of the host motor vehicle (B) and of the leading motor vehicle (A) from a lane centre,
- lateral speed of the leading motor vehicle (A), and
- activation of a direction indicator of the leading motor vehicle (A).

4. The automotive adaptive cruise control (ACC) system of any one of the preceding Claims, further configured to modify either or both the cruise distance and the acceleration profile of the host motor vehicle (B) to maintain the cruise distance when it is determined that the leading motor vehicle (A) is departing from the travel trajectory of the host motor vehicle (B).

5. The automotive adaptive cruise control (ACC) system of Claim **4**, further configured to reduce the cruise distance when it is determined that the leading motor vehicle (A) is departing from the travel trajectory of the host motor vehicle (B).

6. The automotive adaptive cruise control (ACC) system of Claim **4** or **5**, further configured to modify the acceleration profile of the host motor vehicle (B) to result in the cruise speed of the host motor vehicle (B) being quickly restored after the leading motor vehicle (A) has departed from the travel trajectory of the host motor vehicle (B).

7. A motor vehicle (B) comprising the automotive adaptive cruise control (ACC) system of any one of the preceding Claims.

## Patentansprüche

1. Adaptives Automobil-Geschwindigkeitsregelungssystem (ACC-System) für ein Host-Kraftfahrzeug (B), das dazu konfiguriert ist, in mindestens zwei unterschiedlichen Betriebsmodi zu arbeiten, die dazu konfiguriert sind, basierend auf einem oder mehreren Steuerparametern zu arbeiten, und das einen ersten Betriebsmodus umfasst, bei dem die aktuelle Geschwindigkeit des Host-Kraftfahrzeugs (B) gesteuert wird, um eine Reisegeschwindigkeit beizubehalten, und einen zweiten Betriebsmodus, bei dem die aktuelle Geschwindigkeit des Host-Kraftfahrzeugs (B) gesteuert wird, um einen Reiseabstand zu einem vorausfahrenden Kraftfahrzeug (A) beizubehalten;
wobei die Betriebsmodi dazu konfiguriert sind, basierend auf einem oder mehreren Steuerparametern zu arbeiten, die eines oder mehrere der Reisegeschwindigkeit, des Reiseabstands und des Beschleunigungs-/Verlangsamungsprofils beinhalten, die von dem Host-Kraftfahrzeug (B) umgesetzt werden sollen, um die Reisegeschwindigkeit und den Reiseabstand beizubehalten;
und wobei in dem zweiten Betriebsmodus das adaptive Automobil-Geschwindigkeitsregelungssystem (ACC-System) ferner konfiguriert zum:
- Schätzen einer Fahrtrajektorie des voranfahrenden Kraftfahrzeugs (A) in Bezug auf eine Fahrtrajektorie des Host-Kraftfahrzeugs (B),
- Bestimmen, ob das voranfahrende Kraftfahrzeug (A) die Fahrtrajektorie des Host-Kraftfahrzeugs (B) verlässt, basierend auf der geschätzten Fahrtrajektorie des vorausfahrenden Kraftfahrzeugs (A) in Bezug auf die Fahrtrajektorie des Host-Kraftfahrzeugs (B) und auf einer Krümmung der Straße, auf der das voranfahrende und das Host-Kraftfahrzeug (A, B) fahren, und
- wenn bestimmt wird, dass das voranfahrende Fahrzeug (A) die Fahrtrajektorie des Host-Kraftfahrzeugs (B) verlässt, Modifizieren eines oder mehrerer der Steuerparameter auf welchen basierend das Automobil-Geschwindigkeitsregelungssystem (ACC-System) in dem zweiten Betriebsmodus arbeitet, basierend auf dem Straßentyp, auf dem das voranfahrende und das Host-Kraftfahrzeug (A, B) fahren, um ein Verhalten des Automobil-Geschwindigkeitsregelungssystems (ACC-Systems) in dem zweiten Betriebsmodus zwischen Stadtstraßen, Vorstadtstraßen und Autobahnen zu unterscheiden.

2. Adaptives Automobil-Geschwindigkeitsregelungssystem (ACC-System) nach Anspruch 1, das ferner konfiguriert ist zum:
- Schätzen der Straßenhaftung des Host-Kraftfahrzeugs (B), und
- Ändern eines oder mehrerer der Steuerparameter, auf welchen basierend das Automobil-Geschwindigkeitsregelungssystem (ACC-System) in dem zweiten Betriebsmodus arbeitet, auch basierend auf der geschätzten Straßenhaftung des Host-Kraftfahrzeugs (B).

3. Automobil-Geschwindigkeitsregelungssystem (ACC-System) nach einem der vorstehenden Ansprüche, das weiter dazu konfiguriert ist, die Trajektorie des voranfahrenden Fahrzeugs (A) in Bezug auf die des Host-Kraftfahrzeugs (B) basierend auf den folgenden Variablen zu schätzen:
- eine Geometrie der Straße, auf der das Host- und das voranfahrende Fahrzeug (A, B) fahren, die von einer Straßenkrümmung und wahlweise, falls verfügbar, auch von anderen straßenbezogenen Informationen, wie einer Straßenschräglage, einer Anzahl von Straßenspuren und Straßeneinmündungen und -kreuzungen definiert ist;
- Abstände von dem Host-Kraftfahrzeug (B) und dem voranfahrenden Kraftfahrzeug (A) von einer Spurmitte,
- seitliche Geschwindigkeit des voranfahrenden Fahrzeugs (A), und
- Aktivierung eines Fahrtrichtungsanzeigers des voranfahrenden Kraftfahrzeugs (A).

4. Automobil-Geschwindigkeitsregelungssystem (ACC-System) nach einem der vorstehenden Ansprüche, das weiter dazu konfiguriert ist, entweder den Reiseabstand oder sowohl den Reiseabstand als auch das Beschleunigungsprofil des Host-Kraftfahrzeugs (B) zu modifizieren, um den Reiseabstand beizubehalten, wenn bestimmt wird, dass das voranfahrende Kraftfahrzeug (A) die Fahrtrajektorie des Host-Kraftfahrzeugs (B) verlässt.

5. Automobil-Geschwindigkeitsregelungssystem (ACC-System) nach Anspruch 4, das ferner dazu konfiguriert ist, den Reiseabstand zu verringern, wenn bestimmt wird, dass das voranfahrende Kraftfahrzeug (A) die Fahrtrajektorie des Host-Kraftfahrzeugs (B) verlässt.

6. Automobil-Geschwindigkeitsregelungssystem (ACC-System) nach Anspruch 4 oder 5, das ferner dazu konfiguriert ist, das Beschleunigungsprofil des Host-Kraftfahrzeugs (B) zu modifizieren, um zu erzielen, dass die Reisegeschwindigkeit des Host-Kraftfahrzeugs (B) schnell wiederhergestellt wird, nachdem das voranfahrende Kraftfahrzeug (A) die Fahrtrajektorie des Host-Kraftfahrzeugs (B) verlassen hat.

7. Kraftfahrzeug (B), das das adaptive Automobil-Geschwindigkeitsregelungssystem (ACC-System) nach einem der vorstehenden Ansprüche umfasst.

## Revendications

1. Système de régulation de vitesse adaptative de véhicules à moteur (ACC) pour un véhicule automobile hôte (B) configuré pour fonctionner dans au moins deux modes de fonctionnement différents configurés pour fonctionner sur la base d'un ou plusieurs paramètres de commande, et comprenant un premier mode de fonctionnement dans lequel une vitesse actuelle du véhicule automobile hôte (B) est commandée pour maintenir une vitesse de croisière, et un second mode de fonctionnement dans lequel la vitesse actuelle du véhicule automobile hôte (B) est commandée pour maintenir une distance de croisière par rapport à un véhicule automobile avant (A) ;
les modes de fonctionnement sont configurés pour fonctionner sur la base d'un ou plusieurs paramètres de commande comportant un ou plusieurs parmi la vitesse de croisière, la distance de croisière et le profil d'accélération/décélération à mettre en œuvre par le véhicule automobile hôte (B) pour maintenir la vitesse et la distance de croisière ;
dans lequel, dans le second mode de fonctionnement, le système de régulation de vitesse adaptative de véhicules à moteur (ACC) est configuré en outre pour:
- estimer une trajectoire de déplacement du véhicule automobile avant (A) par rapport à une trajectoire de déplacement du véhicule automobile hôte (B),
- déterminer si le véhicule automobile avant (A) s'écarte de la trajectoire de déplacement du véhicule automobile hôte (B) sur la base de la trajectoire de déplacement estimée du véhicule automobile avant (A) par rapport à la trajectoire de déplacement du véhicule automobile hôte (B) et d'une courbure de la route parcourue par les véhicules automobiles avant et hôte (A, B), et
- lorsqu'il est déterminé que le véhicule automobile avant (A) s'écarte de la trajectoire de déplacement du véhicule automobile hôte (B), modifier un ou plusieurs des paramètres de commande sur la base desquels le système de régulation de vitesse adaptative de véhicules à moteur (ACC) fonctionne dans le second mode de fonctionnement, sur la base du type de route sur laquelle les véhicules automobiles avant et hôte (A, B) se déplacent, de manière à différencier un comportement du système de régulation de vitesse adaptative de véhicules à moteur (ACC) dans le second mode de fonctionnement entre les routes urbaines, les routes de banlieue et les autoroutes.

2. Système de régulation de vitesse adaptative de véhicules à moteur (ACC) selon la revendication 1, configuré en outre pour :
- estimer l'adhérence à la route du véhicule automobile hôte (B), et
- modifier un ou plusieurs des paramètres de commande sur la base desquels le système de régulation de vitesse adaptative de véhicules à moteur (ACC) fonctionne dans le second mode de fonctionnement, également sur la base de l'adhérence à la route estimée du véhicule automobile hôte (B).

3. Système de régulation de vitesse adaptative de véhicules à moteur (ACC) selon l'une quelconque des revendications précédentes, configuré en outre pour estimer la trajectoire du véhicule automobile avant (A) par rapport à celle du véhicule automobile hôte (B) sur la base des variables suivantes :
- une géométrie de la route parcourue par les véhicules hôte et avant (A, B), qui est définie par une courbure de route, et facultativement, si elles sont disponibles, également par d'autres informations relatives à la route telles qu'une pente de route, un nombre de voies de circulation, et des jonctions et intersections de route ;
- des distances du véhicule automobile hôte (B) et du véhicule automobile avant (A) par rapport à un centre de voie,
- une vitesse latérale du véhicule automobile avant (A), et
- l'activation d'un indicateur de direction du véhicule automobile avant (A).

4. Système de régulation de vitesse adaptative de véhicules à moteur (ACC) selon l'une quelconque des revendications précédentes, configuré en outre pour modifier l'un ou l'autre, ou les deux, parmi la distance de croisière et le profil d'accélération du véhicule automobile hôte (B) pour maintenir la distance de croisière lorsqu'il est déterminé que le véhicule automobile avant (A) s'écarte de la trajectoire de déplacement du véhicule automobile hôte (B).

5. Système de régulation de vitesse adaptative de véhicules à moteur (ACC) selon la revendication 4, configuré en outre pour réduire la distance de croisière lorsqu'il est déterminé que le véhicule automobile avant (A) s'écarte de la trajectoire de déplacement du véhicule automobile hôte (B).

6. Système de régulation de vitesse adaptative de véhicules à moteur (ACC) selon la revendication 4 ou 5, configuré en outre pour modifier le profil d'accélération du véhicule automobile hôte (B) pour aboutir à ce que la vitesse de croisière du véhicule automobile hôte (B) soit rapidement rétablie après que le véhicule automobile avant (A) s'est écarté de la trajectoire de déplacement du véhicule automobile hôte (B).

7. Véhicule automobile avant et hôte (B) comprenant le système de régulation de vitesse adaptative de véhicules à moteur (ACC) de l'une quelconque des revendications précédentes.
